# EUROPEAN PATENT SPECIFICATION

(11) **EP 2 812 398 B1**
(45) Date of publication and mention of the grant of the patent: **19.07.2017**
(21) Application number: 13705942.4
(22) Date of filing: 06.02.2013
(51) Int. Cl.: C08L 77/06, C08K 7/14

(54) **NON-BLISTERING POLYAMIDE COMPOSITION**
POLYAMIDZUSAMMENSETZUNG OHNE BLISTERBILDUNG
COMPOSITION DE POLYAMIDE SANS CLOQUAGE

(30) Priority: 07.02.2012 EP 12154215; 30.05.2012 EP 12169965
(43) Date of publication of application: 17.12.2014
(73) Proprietor: DSM IP Assets B.V., 6411 TE Heerlen (NL)
(72) Inventor: BURGT VAN DER, Frank, NL-6100 AA Echt (NL); DUIS, Patrick Gerardus, NL-6100 AA Echt (NL)
(74) Representative: van der Ploeg, Antonius Franciscus M.J.
(86) International application number: PCT/EP2013/052307
(87) International publication number: WO 2013/117580

(56) References cited:
- EP-A1- 2 354 176
- WO-A1-2009/012936

## Description

The invention relates to a composition comprising a polyamide and an amount of reinforcing fiber. The invention further relates to the use of the composition for the production of a shaped article and the shaped article itself.

Polyamide resins possess excellent mechanical properties, mouldability, and chemical resistance, in comparison to many other thermoplastic moulding materials, and have therefore been used in automotive parts, electric/electronic (E&E) components, mechanical components, and many other applications. Articles made from polyamide resins can possess extremely desirable physical properties such as a high flow, no blistering at the relevant temperature, high surface quality and/or high stiffness and good dimensional stability. Because of the ongoing trend of miniaturization of E&E components, high flowability is becoming ever more important. Absence of blistering is essential in surface mounting soldering processes. High stiffness, good dimensional stability and good surface quality are required, for example, for use in computer housings.

Because of their physical properties such as high mechanical properties and high heat deflection temperatures, reinforced high-melting polyamides have conventionally been used for E&E components for surface mounting application. Surface mounting technologies (SMT) involve applying a solder-containing paste to a printed circuit board (PCB), placing electrical and electronic components on appropriate places on the surface of the PCB, and passing the entire assembly through an infrared reflow oven that serves to melt the solder and permanently affix the components to the PCB. Older, through-hole methods required that holes be drilled and that each component be individually soldered in place. SMT has permitted the manufacture of smaller and denser layouts than were possible using through-hole techniques and the resulting boards are generally cheaper to manufacture. However, in SMT processes the parts can be heated to temperatures as high as 260°C, or even higher, for example peak temperatures of 270°C are reached. It is important that the plastic electronic parts do not warp or deform or blister under these conditions.

The components can be made from the reinforced high-melting polyamide composition by using a melt-processing method such as injection moulding. However, care must be taken with humid conditions during storage. Because of the absorption of water associated with this kind of polymers, voids are formed in the components when they are heated in an oven during processing, a phenomenon also known as blistering. The resulting parts are consequently undesirably and unacceptably deformed.

According to the down sizing trend of electrical electronics devises, the need of high melt flow is increasing for the resins used in the SMT applications. High melt flow (or low melt viscosity, as these terms are used interchangeably) is a very desirable characteristic of a melt-processable polymer resin composition, as it allows for greater ease of use in processes such as injection moulding. A composition with higher melt flow or lower melt viscosity can be injection moulded with greater ease compared to another resin that does not possess this characteristic. Such a composition has the capability of filling a mould to a much greater extent at lower injection pressures and temperatures and a greater capability to fill intricate mould designs with thin cross-sections. For a linear polymer there is typically a positive correlation between polymer molecular weight and melt viscosity; for branched polymers this is generally the case too.

A composition comprising a polyamide for use in the production of electrical and electronic components is known from EP-2.354.176. The composition described in EP-2.354.176 comprises as the polyamide a polyamide that is built up from terephthalic acid (and/or naphthalene- dicarboxylic acid) and isophthalic acid as the acid components and 1,6-hexanediamine and a C9-C12 diamine as the amine monomers. The polyamide thus always comprises a mixture of amine monomers and a mixture of carboxylic acids. The composition can, next to the polyamide, comprise fillers, reinforcing fibers, flame retardants and additives.

A disadvantage of the polyamide compositions according to EP-2.354.176 is that those compositions display disadvantageous flow behavior. Additionally those compositions are difficult to blend with polymers such as for example PA66, PA46, PA6 and PA410.

It is an object of the invention to overcome or at least reduce the disadvantages. This object is reached by a polyamide composition as defined in claim 1.

The composition according to the invention has a very favorable combination of properties: good flow combined with a very low level of blistering. Therefore shaped articles made from this composition can be thin-walled and subjected to high temperatures without showing blisters on the surface.

WO-09012936-A1, a post-published patent application, describes a flame retardant composition comprising a semi-aromatic polyamide, a reinforcing agent and a flame retardant system, wherein the semi-aromatic polyamide comprises repeat units derived from a mixture of aliphatic and aromatic dicarboxylic acids and a mixture of short chain and long chain aliphatic diamines. WO-09012936-A1 does not describe compositions with a combination of C4 diamine and molecular weight according to the present invention.

EP-2354176-A1 describes a flame retardant polymer composition comprising a semi-aromatic polyamide, fibers and/or fillers and a flame retardant, wherein the semi-aromatic polyamide comprises repeat units derived from a mixture of terphthalic acid and isophthalic acid and a mixture of 1,6-hexanediamine and a C9-C12 dimine. EP-2354176-A1 does not describe compositions with a combination of C4 diamine and molecular weight according to the present invention.

With "blistering of a shaped article" is referred to a distortion of the surface, which results from the presence of absorbed moisture in the shaped article that is entrapped in the article and cannot leave the article while it is being heated in for example a reflow soldering oven. Due to the increasing temperature in the oven the vapor pressure of water that is present in the article increases steadily, however due to the material properties and the construction of the article, the water is not able to escape and this can result in internal delamination that can be observed as so-called blisters on the surface of the article. Blistering is not only from an aesthetical point of view highly undesirable, it can also be an indication that mechanical damage has occurred resulting in either internal or external cracks.

As stated above, blistering can occur during heating the shaped article in a reflow soldering oven. Depending on the exact application, the shaped article is subjected to a specific temperature profile in the reflow soldering oven. In the temperature profile generally four stages, also called zones or phases, can be identified: preheat, thermal soak, reflow and cooling. The preheat stage is the phase in the reflow soldering process where the shaped article is generally heated up rather quickly. The ramp-up rate is usually between 1.0 and 3.0 °C per second until approximately 150°C. In this phase the solvent in the soldering paste begins to evaporate. During the second zone, thermal soak, the solder paste approaches a phase change. The duration of the soak phase varies for different solder pastes, but is generally between 60-200 seconds. After the soak phase, the third phase begins, which is called the reflow phase. It is the part of the process where the maximum temperature is reached. An important aspect here is the peak temperature, which is the maximum allowable temperature of the whole process, which is in most cases around 260 °C. The limit is determined by the component on the assembly with the lowest tolerance for high temperatures. The reflow phase can vary in length and is generally between 60-120 seconds. The final phase is the cooling phase. Generally cooling down is at a rate of approximately 6 °C per second.

In the electronic and electrical industry and especially in the surface mounting device-field, a classification is developed and generally accepted, that indicates the sensitivity of a material to those undesirable effects. The classification system is referred to as JEDEC after the Joint Electron Devices Engineering Council. JEDEC developed a test and classification system for evaluating the moisture/ reflow sensitivity of non-hermetic solid state surface mount devices. The relevant standard here is referred to as IPC/ JEDEC J-STD-020D.1.The level attained after the test indicates the vulnerability to blistering. A level 1 result indicates that the article is immune to blistering regardless of exposure to moisture, while levels 5 or 6 are indicative of a high level of vulnerability to blistering. Testing for level 1 (generally referred to as JEDEC-1) is performed at 85 °C and a relative humidity of 85%. Testing for level 2 (JEDEC-2) is performed at 85 °C and a relative humidity of 60%.

It has surprisingly been found that the composition according to the invention can reach a level 1 test result in the JEDEC-test under the most severe conditions. This result makes it possible to make the articles out of this composition under relatively hot and humid conditions; such as for example apply in Asian countries where large part of the production in the electronic and electrical industry takes place. Further it was surprisingly found that the composition according to the invention that additionally comprises a flame retardant, still displays very good results regarding its blistering behavior. This is surprising as it is generally known that the presence of a flame retardant negatively influences this property.

As described above the composition according to the invention comprises at least one polyamide (A) in an amount of 99-50 wt% and at least one reinforcing agent (B) in an amount of 1-50 wt%. The amounts given are based on the total weight of the composition. When only the polyamide (A) and the reinforcing fiber (B) are present their amounts should add up to 100 wt%, when other components, C and/or D, are additionally present, the amounts of A, B, C and D together add up to 100 wt%.

The at least one polyamide (A) that is present in the composition according to the invention is derived from: at least one di-amine monomer (A1) and at least one di-acid monomer (A2), wherein at least one of the di-amine monomers has 4 carbon atoms and wherein the amount of this C4-diamine is at least 2 mol% relative to the total amount of di-amines. Thus, the polyamide in the composition according to the invention can for example be made from one di-amine monomer and one di- acid monomer, resulting in a homopolymer, however it is for example also possible that the polyamide is made from two different di-amine monomers and one di-acid monomer, or from one di-amine monomer and 2 di-acid monomers, resulting in copolyamides.

At least one of the di-amine monomers that is used to produce the polyamide must have 4 carbon atoms. When more di-amine monomers are used the other di-amine monomers may contain more or less than 4 carbon atoms as long as at least 2 mol% of the di-amine monomers has 4 carbon atoms. When more than one di-amine monomer is used, at least 2 mol% of the total di-amine monomers should be coming from the C4-di-amine monomer. When more di-amine monomers are used, the di-amine monomer comprises, for example, 2-50 mol% of C4-diamine. Preferably at least 5 mol%, more preferably at least 10 mol%, even more preferably at least 15 mol% of all di-amine monomers is present is a C4-diamine.

The di-amine monomer (A1) and di-acid monomer (A2) can be rather freely chosen as long as at least one of the monomers has at least one aromatic structural unit. It is not particularly relevant whether the aromatic structural unit is part of one of the di-amine monomers or whether it is part of one of the di-acid monomers. It is also possible that more than one monomer has an aromatic structural unit; so is it for example possible that 2 di-acid monomers are used with an aromatic structural unit. With aromatic structural unit is meant a structural unit with aromatic character. For example the di-acid monomer contains an aromatic structural unit when the di-acid is an isophthalic acid derivative as isophthalic acid has a structural unit, here the benzene ring, that has an aromatic character.

The polyamide that is used in the composition according to the invention and that fulfills the above given requirements should in addition have a molecular weight, determined as the number average molecular weight, Mₙ, of at least 9000 g/mol. It was found that with a molecular weight lower than 9000 g/mol the requirements for blistering (JEDEC-1) could not always be reached. Preferably the molecular weight is at least 10.000 g/mol.

The number average molecular weight (Mn) is determined by size-exclusion chromatography (SEC) combined with different detectors. The SEC-system consisted of three PFG Linear XL columns (300 mm × 8 mm ID) supplied by Polymer Standards Service, operating at 0.4 ml/min and thermostatted at 35°C. For the measurements a refractive index detector (RI), a viscometer and a right-angle laser-light scattering detector was used and molar masses were calculated using these triple detector signals to yield molar-masses. The injection volume was 75 µl. Hexafluoroisopropanol with 0.1 % (w/w) potassium trifluoro acetate was used as eluent. All samples were filtered over a 0.1 µm filter before injection.

The di-amine monomer (A1) that is used in the production of the polyamide for the composition according to the invention can for example have from 3-12 carbon atoms, preferably 4-10 carbon atoms, as long as at least 2 mol% of all di-amine monomers present is a C4-diamine. With C4-diamine is meant a monomer that contains 4 carbon atoms in the molecule. Preferably the C4-diamine is 1,4-butane-diamine. Other suitable di-amine monomers, next to the C4-diamine, for use in the production of the polyamide are for example pentane-diamine, hexane-diamine and m-xylylene-diamine.

The di-acid monomer (A2) that is used in the production of the polyamide for the composition according to the invention can for example have from 3-14 carbon atoms. The character of the di-acid monomers can for example be aliphatic, cyclo-aliphatic or aromatic. Preferably the di-acid is an aromatic carboxylic acid. Suitable examples of aromatic carboxylic acids are iso-phthalic acid and its derivatives, phthalic acid and its derivatives, terephthalic acid and its derivatives or naphthalene dicarboxylic acid and its derivatives. Preferably the di-acid is iso-phthalic acid, phthalic acid or terephthalic acid.

The reinforcing agent is present in the composition according to the invention in an amount of at least 1 wt% and at most 50 wt%. Examples of suitable fibrous reinforcing fibers are glass- or carbon fibers. Preferably glass-fibers are used.

Next to the polyamide component and the reinforcing agent another component C can be present. This component C can be for example one or more inorganic fillers, and/ or one or more additives. This component C is present in the composition according to the invention in an amount of 0-20 wt%. The amount is relative to the weight of the total composition, comprising component A, B and optionally C and/ or D. When more than one component in this category C is present the amount given for C refers to the total of all components C.

Suitable examples of inorganic fillers are kaolin, clay, talc, mica, wollastonite, calcium carbonate, silica, and potassium titanate. Suitable examples of additives are acid scavengers, impact modifiers, plasticizers, stabilizers (such as, for example, thermal stabilizers, oxidative stabilizers, UV light stabilizers and chemical stabilizers), processing aids (such as, for example, mould release agents and nucleating agents), solid lubricants, colorants (such as carbon black, other pigments, dyes), and nanoclays. Next to the polyamide component A and the reinforcing agent B one or more polymers D other than A can be present. This component D can be for example a polyamide with other characteristics than specified for A, for example a polyamide without any aromatic structural unit or with a molecular weight, Mₙ, of less than 9000 g/mol, or a polyamide with no di-amine monomer with 4 carbon atoms. Examples are other aliphatic polyamides, aromatic polyamides. Those polyamides can be homopolymers or copolymers. Suitable examples are PA410, PA6, PA66, PA1010, PA6I/6T, PA10T, and/or PA6T/4T.

Component D is present in the composition according to the invention in an amount of 0-49 wt%. The amount is relative to the weight of the total composition, comprising component A, B and optionally C and/ or D. When more than one component in this category D is present, the amount given for D refers to the total of all components D.

The composition according to the invention can be prepared by a process, wherein the ingredients are melt-blended. Part of the ingredients may be mixed in a melt-mixer, and the rest of the materials may then be added and further melt-mixed until uniform. Melt-blending may be carried out using any appropriate method known to those skilled in the art. Suitable methods may include using a single or twin-screw extruder, blender, kneader, Banbury mixer, and moulding machine. Twin-screw extrusion is preferred, particularly when the process is used to prepare compositions that contain additives and/ or reinforcing agents.

The polyamide composition according to the invention and described above can advantageously be used for the production of a shaped article, especially because the composition shows advantageous flow behavior which makes it possible to mould and shape small-sized articles. Therefore the present invention also relates to a process for the preparation of a shaped article comprising at least the step of providing a polyamide composition according to the invention and moulding the composition into the desired shape. The present invention further also relates to the use of the polyamide composition according to the invention for the production of a shaped article and to the shaped article itself as the articles made out of this composition have no problems with blistering while retaining their other advantageous properties such as good mechanical strength. The shaped articles are advantageously used in the electrical or electronic industry for the production of electrical or electronic components. An especially advantageous shaped article is a connector for use in automotive application. The invention also relates to a process for the preparation of a shaped article comprising at least the step of providing a polyamide composition according to the invention and moulding the composition into the desired shape.

The invention is further illustrated with the following examples, without being limited to them.

### Preparation of the polyamides and compositions

### Example 1:

A polyamide containing at least one di-amine monomer having 4 carbon atoms was prepared according to the following procedure.

A mixture of 127.09 g tetramethylene diamine, 350.05 g hexamethylene diamine, 487 g water, 0.66 g sodium hypophosphite monohydrate, 91.59 g adipic acid and 567.48 g terephthalic acid was stirred in a 2.5 liter autoclave with heating and with removal of water by distillation. It is noted that a slight excess of tetramethylene diamine of 4 wt% has been used, compared to the composition of the calculated polyamide composition, to compensate for the loss of tetramethylene diamine during the preparation of the polyamide. After 27 minutes a 91 wt% aqueous salt solution was obtained, while the temperature rose from 170°C to 212°C. Then the autoclave was closed. The polymerization was effected at increasing temperatures of 210°C to 240°C for 25 minutes, during which the pressure rose to 2.4 MPa, after which the autoclave's contents were flashed and the solid product was cooled further under nitrogen. The prepolymer powder was post-condensed in the solid phase in a metal tube reactor (d= 85mm) for 4 hours heating at 200°C under a stream of nitrogen (2400g/h) and then under a stream of nitrogen/water vapor (3/1 weight ratio, 2400 g/h)) for 2 hours at 225°C and 18 hours at 250°C. Then the polymer was cooled to room temperature. The molecular weight of the polyamide obtained was 12,1 kg/mol.

### Example 2:

A polyamide was prepared as described in Example 1, however the molecular weight was 15,1 kg/mol.

### Comparative example 3:

A polyamide was prepared as described in Example 1, however the molecular weight was 8,5 kg/mol.

### Example 4:

A polyamide was prepared as described in Example 1, however the molecular weight was 12,0 kg/mol.

### Composition 1:

A composition containing the polyamide of Example 1 was prepared. To the polyamide (69,58 wt%), 30 wt% glass fiber was added together with 0,42 wt% Irganox 1098.

### Composition 2:

A composition containing the polyamide of Example 2 was prepared. To the polyamide (69,48 wt%), 30 wt% glass fiber was added together with 0.47 wt% potassium iodide and 0.05 wt% copper iodide.

### Comparative composition 3:

A composition containing the polyamide of Example 3 was prepared. To the polyamide (70 wt%), 30 wt% glass fiber was added.

### Composition 4:

A composition containing the polyamide of Example 4 was prepared. To the polyamide (58 wt%), 30 wt% glass fiber and 12 wt% Exolit OP1230, a halogen-free flame retardant containing aluminum diethyl phosphinate, were added.

### Injection moulding of test bars

The compositions 1-4, were processed into dried granulate material which was injection moulded in a mould to form test bars with varying thickness of 2.0, 1.6, 0.8 and 0.4 mm. For the evaluation UL bars were used with the indicated thickness.

Prior to injection moulding the materials were pre-dried by applying the following conditions: the copolyamides were heated under vacuum of 0.02 Mpa to 80°C and kept at that temperature and pressure for 24 hrs while a stream of nitrogen was passed. Thereafter the pre-dried materials were injection moulded on an Arburg 5 injection moulding machine with a 22 mm screw diameter and a Campus UL 0.8 mm 2 body injection mould. The temperature of the cylinder wall was set at 345°C, and the temperature of the mould was set at 140°C.

The Campus UL bars thus obtained were used for further tests to measure the blistering properties of the compositions, the results of which are reported below.

### Normal Blistering test

The UL bars with a thickness of 0.8 mm as prepared above were used for the blistering test. The blistering test was executed applying test conditions according JEDEC level 1. First the samples were conditioned for 168 hrs at 85°C and 85% relative humidity. After this conditioning the samples were transferred to a reflow soldering oven where they were subjected to a temperature profile representative of the soldering process. After removal from the oven the samples were examined for the appearance of blisters on the surface. JEDEC level 1 is achieved if no blistering is observed after reflow soldering.

**Table 1: Results of the normal blistering test**

| | Water absorption | Blistering at 260 °C (*) |
|---|---|---|
| Composition 1 | 2.9% | 0% |
| Composition 2 | 3.1% | 0% |
| Comparative Composition 3 | 2.4% | 80% |

| | | |
|---|---|---|
| *(*) the percentage of the test bars that showed blistering at the indicated temperature* | | |

### Testing the Blister onset temperature

The UL bars as prepared above were used for the blister onset temperature test. The blistering test was executed while applying test conditions according to JEDEC level 1. First the samples were conditioned for 168 hrs at 85°C and 85% relative humidity. Then the samples were put in a well-preheated oven during 2 minutes at the indicated temperature. The temperature used was between 240- 280 °C. JEDEC level 1 is achieved if no blistering is observed on the test bars after being exposed to a temperature of at least 260 °C in the oven test. In other words the JEDEC level 1 is reached when the Blister onset temperature was higher than 260 °C. When higher temperatures than 260 °C are reached, the material is even better suited for the reflow soldering process.

For each oven temperature 5 samples were evaluated.

**Table 2: Blister onset temperature in relation to the thickness of the test bars**

| | Composition 1 | Composition 2 | Composition 4 |
|---|---|---|---|
| **Thickness** | | | |
| 2.0mm | 260°C | 270°C | n.a. |
| 1.6mm | 270°C | 270°C | >280°C |
| 0.8mm | >280°C | >280°C | >280°C |
| 0.4mm | >280°C | >280°C | >280°C |

| | | | |
|---|---|---|---|
| *n.a.* = *not available* | | | |

It can be concluded from this Table that Example 1, 2 and 4 reach JEDEC-1 levels.

## Claims

1. Polyamide composition comprising:
A) 99- 50 wt% of at least one polyamide A derived from:
A1) at least one di-amine monomer having 4 carbon atoms and wherein the amount of C4-diamine is at least 2 mol% relative to the total amount of di-amine and,
A2) at least one di-acid monomer,
wherein at least one of the monomers has at least one aromatic structural unit, and wherein the polyamide A, has a number average molecular weight, expressed as Mₙ, of at least 9000 g/mol, wherein the number average molecular weight Mₙ is determined by size-exclusion chromatography (SEC),
and
B) 1- 50 wt% of at least one reinforcing agent and
C) 0- 20 wt% of inorganic fillers and/or additives,
D) 0- 49 wt% of one or more polymers other than A)
wherein the sum of A, B, C and D amounts to 100 wt%.

2. Polyamide according to claim 1 **characterized in that** the polyamide A is a copolyamide.

3. Polyamide composition according to claim 1 or 2 wherein the di-amine monomer comprises 2-50 mol% of C4-diamine.

4. Polyamide composition according to anyone of claim 1-3 **characterized in that** the di-acid monomer is phthalic acid, terephthalic acid or isophthalic acid.

5. Polyamide composition according to anyone of claim 1-4 **characterized in that** polyamide A has a molecular weight, expressed as Mₙ of at least 10.000 g/mol.

6. Polyamide composition according to anyone of claim 1-5 **characterized in that** component D) at least comprises a polyamide other than A).

7. Polyamide composition according to anyone of claim 1-6 **characterized in that** one of the reinforcing agents, B), is a glass fiber.

8. Use of the polyamide composition according to anyone of claim 1-7 for the production of a shaped article.

9. Shaped article made out of the composition according to anyone of claim 1-7.

10. Shaped article according to claim 9 **characterized in that** it is an electrical or electronic component.

11. Shaped article according to claim 9 or 10 **characterized in that** it is a connector for use in an automotive application.

## Patentansprüche

1. Polyamidzusammensetzung, umfassend:
A) 99-50 Gew.-% mindestens eines Polyamids A, das sich von:
A1) mindestens einem Diamin-Monomer mit 4 Kohlenstoffatomen, wobei die Menge an C4-Diamin mindestens 2 Mol-%, bezogen auf die Gesamtmenge an Diamin, beträgt, und
A2) mindestens einem Disäure-Monomer,
ableitet, wobei mindestens eines der Monomere mindestens eine aromatische Struktureinheit aufweist und wobei das Polyamid A ein als Mₙ ausgedrücktes zahlenmittleres Molekulargewicht von mindestens 9000 g/mol aufweist, wobei das zahlenmittlere Molekulargewicht Mₙ durch Größenausschlusschromatographie (SEC) bestimmt wird,
und
B) 1-50 Gew.-% mindestens eines Verstärkungsmittels und
C) 0-20 Gew.-% anorganische Füllstoffe und/oder Additive,
D) 0-49 Gew.-% eines oder mehrerer Polymere, die von A) verschieden sind,
wobei sich die Summe von A, B, C und D auf 100 Gew.-% beläuft.

2. Polyamid nach Anspruch 1, **dadurch gekennzeichnet, dass** es sich bei dem Polyamid A um ein Copolyamid handelt.

3. Polyamidzusammensetzung nach Anspruch 1 oder 2, wobei das Diamin-Monomer 2-50 Mol-% C4-Diamin umfasst.

4. Polyamidzusammensetzung nach einem der Ansprüche 1-3, **dadurch gekennzeichnet, dass** es sich bei dem Disäure-Monomer um Phthalsäure, Terephthalsäure oder Isophthalsäure handelt.

5. Polyamidzusammensetzung nach einem der Ansprüche 1-4, **dadurch gekennzeichnet, dass** Polyamid A ein als Mₙ ausgedrücktes Molekulargewicht von mindestens 10.000 g/mol aufweist.

6. Polyamidzusammensetzung nach einem der Ansprüche 1-5, **dadurch gekennzeichnet, dass** Komponente D) mindestens ein Polyamid, das von A) verschieden ist, umfasst.

7. Polyamidzusammensetzung nach einem der Ansprüche 1-6, **dadurch gekennzeichnet, dass** es sich bei einem der Verstärkungsmittel B) um eine Glasfaser handelt.

8. Verwendung der Polyamidzusammensetzung nach einem der Ansprüche 1-7 zur Herstellung eines Formkörpers.

9. Formkörper aus der Zusammensetzung nach einem der Ansprüche 1-7.

10. Formkörper nach Anspruch 9, **dadurch gekennzeichnet, dass** es sich um ein elektrisches oder elektronisches Bauteil handelt.

11. Formkörper nach Anspruch 9 oder 10, **dadurch gekennzeichnet, dass** es sich um einen Verbinder zur Verwendung bei einer Automobilanwendung handelt.

## Revendications

1. Composition de polyamide comprenant :
A) 99 à 50 % en poids d'au moins un polyamide A dérivé de :
A1) au moins un monomère diamine comportant 4 atomes de carbone et dans lequel la quantité de diamine C4 est d'au moins 2 %mol relativement à la quantité totale de diamine, et
A2) au moins un monomère diacide,
dans laquelle au moins un des monomères comporte au moins une unité structurale aromatique, et dans laquelle le polyamide A a une masse moléculaire moyenne en nombre, exprimée en tant que Mₙ, d'au moins 9 000 g/mol, la masse moléculaire moyenne en nombre Mₙ étant déterminée par chromatographie d'exclusion stérique (SEC),
et
B) 1 à 50 % en poids d'au moins un agent de renforcement et
C) 0 à 20 % en poids de charges inorganiques et/ou d'additifs,
D) 0 à 49 % en poids d'un ou plusieurs polymères autres que A)
la somme de A, B, C et D représentant 100 % en poids.

2. Polyamide selon la revendication 1, **caractérisé en ce que** le polyamide A est un copolyamide.

3. Composition de polyamide selon la revendication 1 ou 2, dans laquelle le monomère diamine comprend 2 à 50 %mol de diamine C4.

4. Composition de polyamide selon l'une quelconque des revendications 1 à 3, **caractérisée en ce que** le monomère diacide est l'acide phtalique, l'acide téréphtalique ou l'acide isophtalique.

5. Composition de polyamide selon l'une quelconque des revendications 1 à 4, **caractérisée en ce que** le polyamide A a une masse moléculaire, exprimée en tant que Mₙ, d'au moins 10 000 g/mol.

6. Composition de polyamide selon l'une quelconque des revendications 1 à 5, **caractérisée en ce que** le constituant D) comprend au moins un polyamide autre que A).

7. Composition de polyamide selon l'une quelconque des revendications 1 à 6, **caractérisée en ce que** l'un des agents de renforcement, B), est une fibre de verre.

8. Utilisation de la composition de polyamide selon l'une quelconque des revendications 1 à 7 pour la production d'un article formé.

9. Article formé fabriqué à partir de la composition selon l'une quelconque des revendications 1 à 7.

10. Article formé selon la revendication 9, **caractérisé en ce qu'**il s'agit d'un composant électrique ou électronique.

11. Article formé selon la revendication 9 ou 10, **caractérisé en ce qu'**il s'agit d'un connecteur destiné à une utilisation dans une application automobile.
